# FASCICULE DE BREVET EUROPEEN

(11) **EP 4 291 937 B1**
(45) Date de publication et mention de la délivrance du brevet: **20.08.2025**
(21) Numéro de dépôt: 22704533.3
(22) Date de dépôt: 09.02.2022
(51) Int. Cl.: G02B 23/12, H04N 5/33

(54) **SYSTÈME ET PROCÉDÉ D'OBSERVATION**
BEOBACHTUNGSSYSTEM UND -VERFAHREN
OBSERVATION SYSTEM AND METHOD

(30) Priorité: 10.02.2021 FR 2101275
(43) Date de publication de la demande: 20.12.2023
(73) Titulaire: Bertin Technologies, 78180 Montigny-le-Bretonneux (FR)
(72) Inventeur: GRASSER, Régis, 13100 AIX EN PROVENCE (FR); SOULIÉ, Emmanuel, 13790 ROUSSET (FR); LAPERE, Vincent, 13005 MARSEILLE (FR)
(74) Mandataire: Hautier IP
(86) Numéro de dépôt international: PCT/EP2022/053132
(87) Numéro de publication internationale: WO 2022/171673

(56) Documents cités:
- WO-A1-2007/044582
- US-B1- 8 860 831

## Description

### DOMAINE TECHNIQUE DE L'INVENTION

L'invention concerne l'observation d'une scène, et plus particulièrement une observation à l'aide d'un système portatif.

### ETAT DE LA TECHNIQUE

Actuellement, il existe des systèmes monoculaires, ou des jumelles, utilisés pour observer des scènes. Ces systèmes peuvent être purement optiques, c'est-à-dire qu'ils comprennent des voies d'observation directe, par exemple des jumelles pour observer de manière grossissante une scène éloignée. D'autres systèmes, par exemple les appareils photo numériques, comprennent à la fois une voie d'observation directe et une voie d'observation numérique, c'est-à-dire une voie utilisant un capteur numérique pour élaborer une image numérique de la scène observée. Mais ces systèmes ne permettent pas d'observer efficacement une scène de nuit.

Certains systèmes permettent de visualiser une scène de nuit, on peut citer les documents de brevet CN109974857 A, WO2018215066 A1, US9723227B2, US9167179B2 et US5254852 A, qui divulguent des systèmes ayant une voie d'observation numérique munie d'un capteur du type infrarouge ; et la demande de brevet européen EP1857854 A1, qui divulgue un système muni de deux caméras du type infrarouge indépendantes.

D'autres systèmes peuvent être adaptés pour observer une scène aussi bien de jour comme de nuit. Par exemple, on peut citer la demande de brevet internationale WO201218812 qui divulgue un système d'observation comprenant une voie d'observation directe, une voie d'observation numérique utilisant un capteur du type infrarouge et une fusion optique des deux voies. Mais ces systèmes ne sont pas assez efficaces en observation de nuit.

On peut citer les documents de brevet suivants : WO201216794 A1, WO200744582 A1, US7307793 B2, WO200569056 A2, WO2003104877 A1 et US6195206, qui divulguent des systèmes d'observation ayant une voie d'observation numérique munie d'un capteur du type infrarouge, une voie d'observation numérique ayant un dispositif d'amplification d'intensité lumineuse et qui utilisent une fusion optique des deux voies.

On peut, en outre, citer le brevet américain US8836793 B1, qui divulgue un système ayant deux voies d'observation numérique munies chacune d'un capteur du type infrarouge, et qui utilise une fusion numérique des images issues des capteurs, et les autres documents de brevet suivants :US6560029 B1 US7345277 B2, qui divulguent des systèmes d'observation ayant une voie d'observation numérique munie d'un capteur du type infrarouge, une voie d'observation numérique ayant un dispositif d'amplification d'intensité lumineuse et qui utilisent une fusion numérique des images issues du capteur et du dispositif d'amplification.

Mais ces systèmes consomment énormément d'énergie et nécessitent, en outre, d'être équipés de batteries suffisantes qui alourdissent les systèmes.

### RESUME DE L'INVENTION

Un objet consiste à pallier ces inconvénients, et plus particulièrement à fournir des moyens d'observation qui sont adaptés à une vision de jour comme de nuit, et dont la consommation des dispositifs électroniques est réduite.

Un autre objet consiste à fournir des moyens d'observation portatifs légers.

Encore un autre objet consiste à améliorer l'observation d'une scène en vision de jour comme de nuit.

Un autre objet consiste à fournir un système d'observation adapté pour illuminer la scène à observer tout en étant suffisamment compact.

Selon un aspect, il est proposé un système d'observation, comprenant une première voie optique apte à recevoir un premier rayonnement optique émis par une scène à observer et comportant un premier capteur configuré pour élaborer une première image numérique à partir du premier rayonnement optique ; une deuxième voie optique apte à recevoir un deuxième rayonnement optique émis par la scène et comportant un deuxième capteur configuré pour élaborer une deuxième image numérique à partir du deuxième rayonnement optique ; un afficheur configuré pour afficher une troisième image numérique à partir des première et deuxième images numériques ; et une troisième voie optique couplée à l'afficheur et conformée pour observer la troisième image numérique.

Le système comporte une quatrième voie optique reliant les première et troisième voies optiques, et en ce que la première voie optique comporte un élément optique configuré pour transmettre une partie du premier rayonnement optique vers la quatrième voie optique.

La quatrième voie optique permet une observation directe de la scène, elle est également appelée voie d'observation directe. Ainsi, on fournit un système d'observation permettant de limiter la consommation des capteurs, puisqu'il est adapté pour être utilisé en vision de jour en l'absence de batterie.

Selon un mode de réalisation, le système comprend un ensemble optique comportant l'élément optique et un système optique configuré pour transmettre la partie du premier rayonnement optique de la quatrième voie optique vers la troisième voie optique.

Selon un autre mode de réalisation, le système comprend un ensemble optique comportant l'élément optique et un système optique configuré pour transmettre le premier rayonnement optique vers l'élément optique.

L'ensemble optique peut être monobloc.

On fournit ainsi une structure particulièrement simple et rigide.

Le premier capteur et l'afficheur peuvent être montés fixes sur l'ensemble optique.

On peut alors garantir une harmonisation entre la voie d'observation directe et une voie d'observation numérique munie d'un capteur, afin de présenter des images à l'opérateur en limitant le décalage entre les champs.

La quatrième voie optique peut comprendre un réticule de visée monté fixe sur l'ensemble optique.

Le système peut comprendre une unité de traitement d'images configurée pour élaborer la troisième image numérique à partir d'une fusion entre les première et deuxième images numériques.

La quatrième voie optique peut comporter un atténuateur optique à opacité variable apte à modifier une intensité lumineuse de la partie du premier rayonnement optique, l'unité de traitement d'images étant en outre configurée pour déterminer une intensité lumineuse d'au moins un pixel d'au moins l'une des première et deuxième images numériques, le système comprenant une unité de commande électronique configurée pour commander une variation de l'opacité de l'atténuateur optique à partir de l'intensité lumineuse déterminée.

Ainsi, on fournit un système qui améliore l'observation d'une scène. En particulier, on fournit un système automatisé qui tient compte de l'intensité lumineuse du rayonnement optique émis par la scène pour améliorer l'observation.

L'unité de commande électronique peut être configurée pour commander une augmentation de l'opacité de l'atténuateur optique lorsque l'intensité lumineuse dudit au moins un pixel est supérieure ou égale à un seuil.

L'élément optique peut en outre être configuré pour transmettre une autre partie du premier rayonnement optique vers le premier capteur.

Le système peut en outre comporter un émetteur configuré pour émettre un troisième rayonnement optique du domaine de l'infrarouge, l'élément optique étant en outre configuré pour transmettre le troisième rayonnement optique vers la scène à observer.

Ainsi, on fournit un système d'observation compact qui permet d'illuminer une scène à observer.

Le troisième rayonnement optique peut être du type impulsionnel, le système comprenant en outre un récepteur configuré pour recevoir une partie du troisième rayonnement optique impulsionnel renvoyée par la scène à observer et une unité de contrôle électronique configurée pour déterminer une distance par rapport à la scène à observer à partir de la partie du troisième rayonnement optique impulsionnel renvoyée.

On fournit ainsi un système d'observation compact qui permet à la fois d'illuminer une scène à observer et d'effectuer une mesure d'une distance entre la scène et le système d'observation.

Selon un autre aspect, il est proposé un procédé d'observation, comprenant une réception d'un premier rayonnement optique émis par une scène à observer à partir d'une première voie optique munie d'un premier capteur élaborant une première image numérique à partir du premier rayonnement optique ; une réception d'un deuxième rayonnement optique émis par la scène à partir d'une deuxième voie optique munie d'un deuxième capteur élaborant une deuxième image numérique à partir du deuxième rayonnement optique ; et une observation d'une troisième image numérique à partir d'une troisième voie optique munie d'un afficheur affichant la troisième image numérique à partir des première et deuxième images numériques.

Le procédé comporte une transmission d'une partie du premier rayonnement optique vers la troisième voie optique.

Le procédé peut comporter un atténuateur optique à opacité variable apte à modifier une intensité lumineuse de la partie du premier rayonnement optique, et une détermination d'une intensité lumineuse d'au moins un pixel d'au moins l'une des première et deuxième images numériques et une variation de l'opacité de l'atténuateur optique à partir de l'intensité lumineuse déterminée.

Le procédé peut en outre comprendre une émission d'un troisième rayonnement optique du domaine de l'infrarouge et une transmission à partir de la première voie optique du troisième rayonnement optique vers la scène à observer.

### BRÈVE DESCRIPTION DE LA FIGURE

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
la figure 1, illustre schématiquement un mode de réalisation d'un système d'observation selon l'invention ;
la figure 2 illustre schématiquement un autre mode de réalisation du système d'observation ;
la figure 3 illustre schématiquement un autre mode de réalisation d'un système d'observation ;
la figure 4 illustre schématiquement un autre mode de réalisation d'un système d'observation ; et
la figure 5 illustre schématiquement encore un autre mode de réalisation d'un système d'observation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

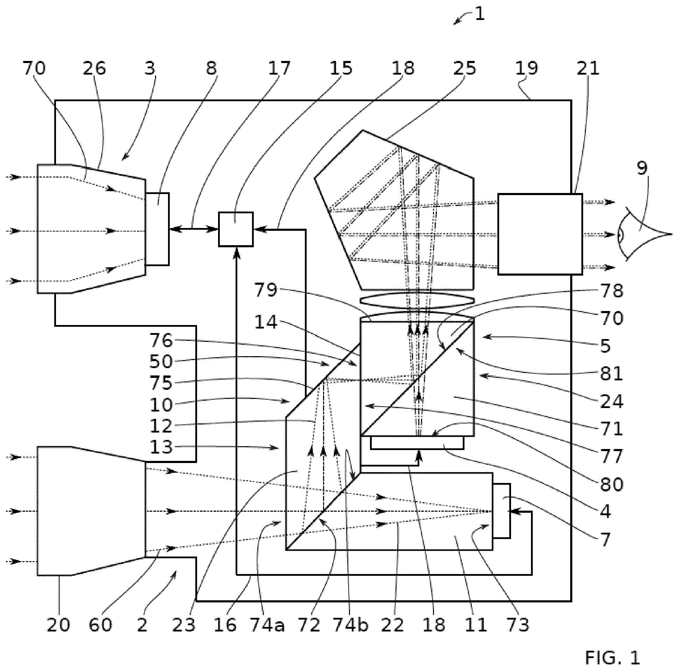

Sur les figures 1 à 5, on a représenté un système d'observation 1 d'une scène. De manière générale, le système 1 comprend une première voie optique 2, une deuxième voie optique 3, un afficheur 4 et une troisième voie optique 5 couplée à l'afficheur 4. Avantageusement, le système d'observation 1 est portatif, c'est-à-dire qui peut être transporté à la main par un utilisateur. En outre, la première voie optique 2 est apte à recevoir un premier rayonnement optique 60 émis par la scène à observer, cette dernière n'étant pas représentée sur les figures à des fins de simplification. On entend par rayonnement optique, un rayonnement électromagnétique comprenant les domaines de l'ultraviolet, du visible et de l'infrarouge. La scène à observer peut être située à l'extérieur, comme à l'intérieur d'un bâtiment, et le système 1 est particulièrement adapté pour observer la scène de jour comme de nuit. La première voie optique 2 comporte un premier capteur 7 configuré pour élaborer une première image numérique à partir du premier rayonnement optique 60. Le premier capteur 7 est un dispositif électronique, il est alimenté par une batterie, non représentée sur les figures à des fins de simplification. La deuxième voie optique 3 est apte à recevoir un deuxième rayonnement optique 70 émis par la scène et comporte un deuxième capteur 8 configuré pour élaborer une deuxième image numérique à partir du deuxième rayonnement optique 70. Les première et deuxième voies optiques 2, 3 sont également considérées comme des voies d'observation numérique car elles comportent chacune un capteur numérique 7, 8 configuré pour élaborer une image numérique. Les première et deuxième voies optiques 2, 3 sont également notées première et deuxième voies numériques. Le deuxième capteur 8 est également alimenté par la batterie. L'afficheur 4 est configuré pour afficher une troisième image numérique à partir des première et deuxième images numériques issues respectivement des premier et deuxième capteurs 7, 8. L'afficheur 4 est alimenté par la batterie. Par exemple, la première voie optique 2 peut être une voie d'observation numérique de jour, c'est-à-dire que le premier capteur 7 est sensible à la lumière visible par un œil de l'utilisateur 9. Avantageusement, la deuxième voie optique 3 peut être une voie d'observation numérique de nuit, c'est-à-dire que le deuxième capteur 8 est sensible à l'infrarouge, en particulier aux infrarouges dont la longueur d'onde est supérieure ou égale à 700 nm. Selon un autre mode de réalisation, le premier capteur 7 est sensible à une lumière infrarouge, par exemple une lumière dont la longueur d'onde est supérieure ou égale à 700 nm. Par ailleurs, la troisième voie optique 5 est conformée pour observer la troisième image numérique issue de l'afficheur 4. De façon générale, on entend par voie optique un canal dans lequel se propage un rayonnement optique.

En particulier, le système 1 comporte une quatrième voie optique 10 reliant les première et troisième voies optiques 2, 5. La première voie optique 2 comporte en outre un élément optique 11 configuré pour transmettre une partie 12 du premier rayonnement optique 60 vers la quatrième voie optique 10. Par exemple, l'élément optique 11 transmet la partie 12 du premier rayonnement optique 60 vers la quatrième voie optique 10, tandis qu'une autre partie 22 du premier rayonnement optique 60 est dirigée vers le premier capteur 7. On entend par élément optique 11, un élément permettant de modifier la trajectoire d'un rayonnement optique ou les propriétés du rayonnement optique, tels qu'un miroir, une lentille, un réseau de diffraction, un prisme, etc. De préférence, l'élément optique 11 est un séparateur optique, par exemple un miroir semi-réfléchissant, c'est-à-dire un élément optique permettant de transmettre une partie de la lumière et de réfléchir le reste. En d'autres termes lorsque l'élément optique 11 est un séparateur optique, il permet de transmettre la partie 12 du premier rayonnement optique 60 vers la quatrième voie optique 10 et l'autre partie 22 du premier rayonnement optique 60 vers le premier capteur 7. L'élément optique 11 peut être un prisme ayant un dioptre d'entrée 72 semi-réfléchissant. On entend par prisme, un bloc de verre taillé comprenant au moins cinq faces, ou dioptres. La quatrième voie optique 10 permet une observation directe de la scène par l'utilisateur. On l'appelle également voie directe optique. En d'autres termes, la quatrième voie optique 10 ne comporte ni un dispositif électronique configuré pour transformer les photons en électrons, tel un dispositif d'amplification, ni un capteur électronique transformant un rayonnement lumineux en image numérique.

Avantageusement, le système 1 comporte un ensemble optique 13 comprenant au moins l'élément optique 11. L'ensemble optique 13 peut en outre comprendre d'autres éléments optiques. Ces autres éléments optiques sont notés systèmes optiques 23, 24, 111. L'élément optique 11 et les systèmes optiques 23, 24, 111 peuvent être des prismes et l'ensemble optique 13 est alors un ensemble prismatique, c'est-à-dire un ensemble de prismes. L'ensemble optique 13 est une structure particulièrement simple et rigide et permet de simplifier tout en allégeant le système d'observation 1.

Sur la figure 1, on a représenté un mode de réalisation de l'ensemble optique 13. L'ensemble optique 13 comporte l'élément optique 11, un premier système optique 23 couplé à l'élément optique 11, et un deuxième système optique 24 couplé au premier système optique 23. De façon générale, on entend par deux éléments optiques couplés entre eux, deux éléments optiques qui sont en contact l'un avec l'autre. Ils peuvent être montés fixes, ou amovibles, l'un sur l'autre. Dans ce mode de réalisation, l'élément optique 11 et le premier système optique 23 sont respectivement deux prismes et le deuxième système optique 24 comporte deux prismes 70, 71.

L'élément optique 11 comporte le dioptre d'entrée 72 et un dioptre de sortie 73. Le dioptre de sortie 73 est un dioptre neutre couplé au premier capteur 7. On entend par dioptre neutre, un dioptre transparent qui laisse passer les rayonnements optiques. Le dioptre d'entrée 72 est un miroir semi-réfléchissant pour transmettre une première partie 12 du premier rayonnement 60 vers la quatrième voie optique 10 et une deuxième partie 22 du premier rayonnement 60 vers le premier capteur 7, via le dioptre de sortie 73. Dans ce mode de réalisation, la première partie 12 du premier rayonnement optique 60 est transmise, par réflexion, vers la quatrième voie optique 10. Le premier système optique 23 est configuré pour transmettre la première partie 12 du premier rayonnement optique 60 de la quatrième voie optique 10 vers la troisième voie optique 5. Le premier système optique 23 comporte un premier dioptre d'entrée 74a neutre pour recevoir le premier rayonnement 60, un deuxième dioptre d'entrée 74b neutre couplé au dioptre d'entrée 72 de l'élément optique 11 pour recevoir la première partie 12 du rayonnement. Par ailleurs, le premier système optique 23 comporte un dioptre de sortie 76 neutre et un dioptre intermédiaire 75 réfléchissant la première partie 12 de rayonnement pour la transmettre à la troisième voie optique 5, via le dioptre de sortie 76. Le deuxième système optique 24 a pour rôle d'établir une fusion optique, c'est-à-dire une superposition de rayonnements optiques, entre la troisième image numérique affichée et la première partie 12 du premier rayonnement optique 60 issu de la scène à observer. En d'autres termes, le deuxième système optique 24 est configuré pour transmettre la première partie 12 du premier rayonnement optique 60 vers un oculaire 21 et pour transmettre la troisième image numérique issue de l'afficheur 4 vers l'oculaire 21. Le deuxième système optique 24 est un séparateur optique. Il comporte un premier prisme 70 ayant un dioptre d'entrée 77 neutre couplé au dioptre de sortie 76 du premier système optique 23, un dioptre intermédiaire 78 semi-réfléchissant pour transmettre une partie de la première partie 12 de rayonnement vers un dioptre de sortie 79, neutre, correspondant à un dioptre de sortie de l'ensemble optique 13. Ce dioptre de sortie 79 transmet les rayonnements issus de la scène à observer et de la troisième image numérique vers l'oculaire 21, afin de pouvoir observer la scène et la troisième image numérique. En outre, le deuxième système optique 24 comporte un deuxième prisme 71 ayant un dioptre d'entrée 80 neutre couplé à l'afficheur 4 et un dioptre de sortie 81 neutre couplé au dioptre intermédiaire 78 du premier prisme 70. Ainsi, le deuxième prisme 71 permet de transmettre la troisième image numérique vers le dioptre de sortie 79 de l'ensemble optique 13. La troisième voie optique 5 comprend le deuxième système optique 24 et permet d'observer la scène à partir du premier rayonnement optique 60 et de la troisième image numérique affichée par l'afficheur 4.

Avantageusement les prismes 11, 23, 70, 71, 111 de l'ensemble optique 13 peuvent être collés entre eux pour former un ensemble optique 13 monobloc. Selon encore un autre avantage, d'autres éléments 4, 7, 14, 90, 107 peuvent être montés fixes sur l'ensemble optique 13. Par ailleurs, lorsque des éléments 4, 7, 14, 90, 107 sont montés fixes sur un ensemble optique 13 monobloc, l'ensemble optique 13 monobloc et les éléments 4, 7, 14, 90, 107 fixés forment un ensemble monobloc 50. On entend par monobloc, un ensemble d'éléments fixés entre eux de sorte que le retrait d'un des éléments de l'ensemble entraîne une destruction mécanique de l'ensemble.

Ainsi, on fournit un ensemble monobloc 50 qui empêche un mouvement relatif entre les éléments de l'ensemble 50, qui peuvent avoir lieu, par exemple lors de chocs ou de vibrations. On dit également que l'ensemble monobloc 50 à un rôle d'invariant optique. Avantageusement, le premier capteur 7, et l'afficheur 4 sont montés fixes sur l'ensemble optique 13 monobloc. Cela permet de rendre robuste une harmonisation des première, troisième et quatrième voies optiques 2, 5, 10 à tous déplacements relatifs entre les différents éléments des voies optiques, en particulier les déplacements par rapport à un objectif 20 situé en entrée de la première voie optique 2 ou à l'oculaire 21 situé en sortie de la troisième voie optique 5. La deuxième voie optique 3 peut être harmonisée avec un traitement numérique d'images avec la première voie numérique 2, selon des techniques de traitement d'images classiques. Ainsi, après l'harmonisation numérique des première et deuxième voies numériques 2, 3, l'ensemble monobloc 50 permet d'harmoniser les première et deuxième voies numériques 2, 3 avec les troisième et quatrième voies optiques 5, 10 . L'ensemble monobloc 50 permet de superposer la troisième image numérique, issue des première et deuxième images numériques, à l'image de la scène issue de la quatrième voie optique 10, c'est-à-dire la partie 12 du premier rayonnement optique 60, sans décalage entre les champs. L'ensemble monobloc 50 permet une harmonisation robuste, en maintenant une harmonisation lors de chocs et de vibrations éventuels. En d'autres termes, l'ensemble monobloc 50 permet de minimiser le risque de désharmonisation.

Avantageusement, l'ensemble optique 13 peut comporter un réticule de visée 14. Plus particulièrement, la quatrième voie optique 10 comporte le réticule de visée 14. Par exemple, le réticule 14 est une figure déposée sur une surface d'un verre par sérigraphie ou photolithographie. Le réticule 14 peut également être fait de fils tendus. On peut ainsi superposer une figure sur l'image de la scène à observer. Le réticule de visée 14 peut être monté sur l'ensemble optique 13, de préférence de manière fixe pour faire alors partie de l'ensemble monobloc 50. Cela permet de rendre robuste l'harmonisation des première, troisième et quatrième voies optiques 2, 5, 10 avec le réticule de visée 14 à tous déplacements relatifs entre les différents éléments de ces voies optiques 2, 5, 10. Avantageusement, le réticule de visée 14 est monté fixe sur le dioptre de sortie 76 du premier système optique 23.

Le système 1 peut également comprendre une unité de traitement d'images 15, par exemple un microprocesseur, configurée pour élaborer la troisième image numérique à partir des première et deuxième images numériques. Par exemple, la troisième image est élaborée à partir d'une fusion numérique entre les première et deuxième images numériques. L'unité 15 est couplée, au premier capteur 7 par une connexion 16, et au deuxième capteur 8 par une connexion 17. En outre, l'unité 15 est couplée à l'afficheur 4, par une connexion 18, pour transmettre la troisième image numérique à l'afficheur 4.

Le système d'observation 1 comporte, avantageusement, un boîtier 19 au sein duquel sont logés les capteurs 7, 8, l'élément optique 11, l'afficheur 4, l'ensemble optique 13, le réticule 14, et la batterie. En outre, la première voie optique 2 peut comprendre l'objectif 20 monté sur le boîtier 19. La deuxième voie optique 3 peut comprendre également un objectif supplémentaire 26 monté sur le boîtier 19. L'oculaire 21 permet à l'utilisateur 9 d'observer la troisième image issue de l'afficheur 4 et la première partie 12 du premier rayonnement optique 60. Avantageusement, en cas de mouvement relatif entre l'objectif 20 et l'ensemble monobloc 50, les première, troisième et quatrième voies optiques 2, 5 et 10 et le réticule 14 restent harmonisés les uns par rapport aux autres.

Avantageusement, la troisième voie optique 5 comprend un prisme de redressement 25 de l'image placé entre le deuxième système optique 24 et l'oculaire 21, comme illustré sur les figures 1, 2 et 4. Le prisme de redressement 25 comporte sept faces, dont deux faces parallèles entre elles et non représentées sur les figures 1, 2 et 4, trois faces réfléchissantes, une face d'entrée transparente et une face de sortie transparente. De préférence, l'oculaire 21 et le prisme de redressement 25 ne sont pas montés fixes sur l'ensemble optique 13. Ainsi, des mouvements relatifs de l'oculaire 21 ou du prisme de redressement 25 n'impliquent pas de variations relatives entre les champs.

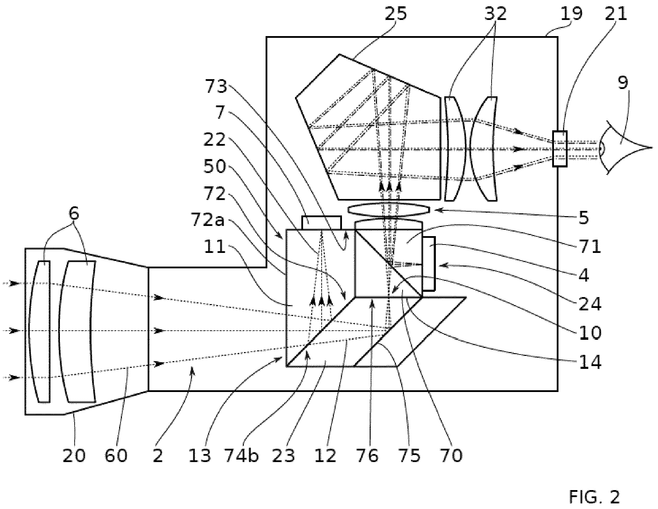

Sur la figure 2, on a représenté un autre mode de réalisation, dans lequel l'élément optique 11 est également un séparateur optique pour transmettre la partie 12 du premier rayonnement optique 60 vers la quatrième voie optique 10 et pour transmettre l'autre partie 22 du premier rayonnement optique 60 vers le premier capteur 7. Sur la figure 2, on a également représenté les quatre prismes définis ci-avant mais disposés différemment. En particulier, l'élément optique 11 comporte un dioptre d'entrée supplémentaire 72a neutre pour transmettre le premier rayonnement optique 60 vers le dioptre d'entrée 72 semi réfléchissant.

Avantageusement, l'objectif 20 de la première voie optique 2 peut comprendre un dispositif optique 6, par exemple une ou plusieurs lentilles de focalisation, configuré pour transmettre le premier rayonnement optique 60 vers l'élément optique 11. En particulier, le dispositif optique 6 permet de modifier la focalisation du premier rayonnement optique 60. Le système 1 peut en outre comprendre d'autres lentilles de focalisation 32 placées entre le prisme de redressement 25 et l'oculaire 21, comme illustré sur la figure 2. Sur la figure 2, la deuxième voie optique n'a pas été représentée à des fins de simplification. Dans le mode de réalisation illustré à la figure 2, la première partie 12 du premier rayonnement optique 60 est transmise, par transparence, vers le premier système optique 23.

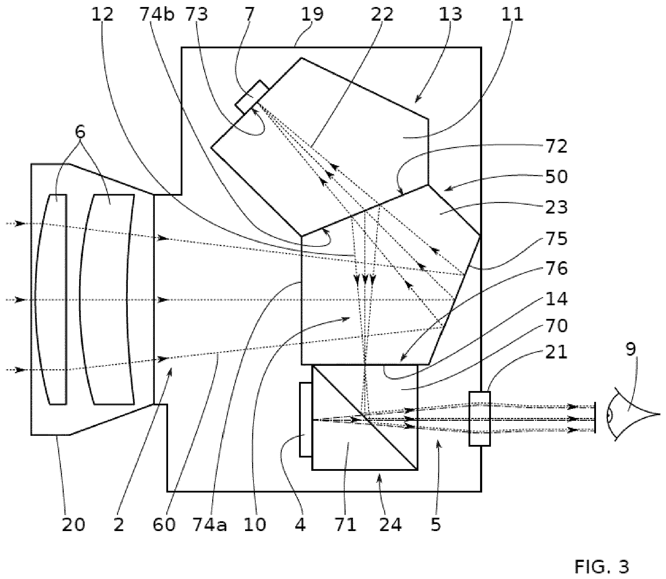

Sur la figure 3, on a représenté un autre mode de réalisation, dans lequel l'ensemble optique 13 comporte les quatre prismes définis ci-avant mais disposés différemment. Dans cet autre mode de réalisation, le premier système optique 23 est en outre configuré pour transmettre le premier rayonnement optique 60 vers l'élément optique 11. En particulier, le premier système optique 23 est placé de sorte que son dioptre intermédiaire réfléchissant 75 réfléchit le premier rayonnement optique 60 vers le dioptre d'entrée 72 de l'élément optique 11. Cet ensemble optique 13 permet de réduire significativement la longueur de la première voie optique 2, et permet de réduire l'encombrement du système d'observation 1.

Sur la figure 3, la deuxième voie optique n'a pas été représentée à des fins de simplification.

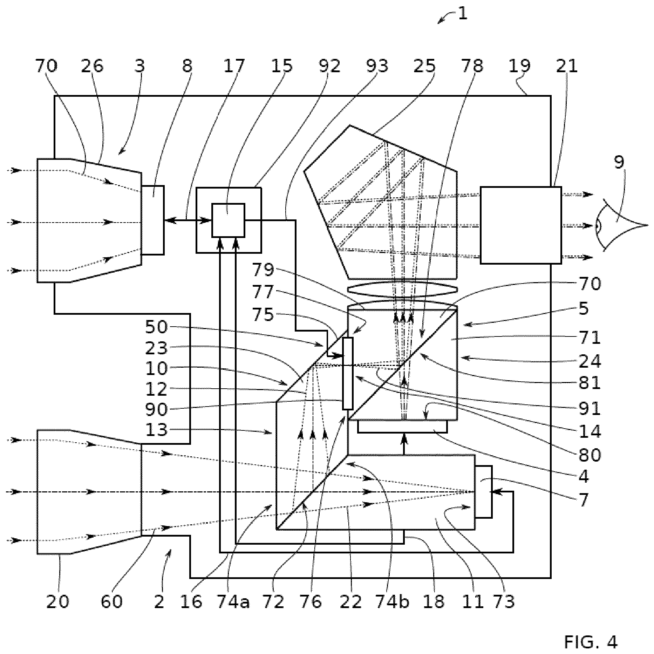

Sur la figure 4, on a représenté un autre mode de réalisation du système d'observation, dans lequel la quatrième voie optique 10 comporte en outre un atténuateur optique 90 à opacité variable. C'est-à-dire que l'atténuateur optique 90 est apte à modifier une intensité lumineuse de la première partie 12 du premier rayonnement optique 60. En particulier, l'atténuateur optique 90 reçoit la première partie 12 du premier rayonnement optique 60 et transmet un troisième rayonnement optique 91 vers la troisième voie optique 5. On peut donc observer, à l'aide de la troisième voie optique 5, le troisième rayonnement optique 91 superposé à la troisième image numérique affichée par l'afficheur 4. Plus particulièrement, le deuxième système optique 24 reçoit le troisième rayonnement optique 91 et permet d'établir une fusion optique entre la troisième image numérique et le troisième rayonnement optique 91 transmis par l'atténuateur 90. En d'autres termes, le deuxième système optique 24 est configuré pour transmettre le troisième rayonnement optique 91 vers l'oculaire 21 et pour transmettre la troisième image numérique issue de l'afficheur 4 vers l'oculaire 21. L'atténuateur 90 peut être monté fixe sur le dioptre de sortie 76 du premier système optique 23, et transmettre le troisième rayonnement optique 91 par transparence. En variante, l'atténuateur 90 peut être monté fixe sur le dioptre intermédiaire 75 du premier système optique 23, et transmettre le troisième rayonnement optique 91 par réflexion. Avantageusement, l'atténuateur optique 90 est monté fixe sur l'ensemble optique 13 monobloc.

Le système 1 comporte en outre une unité de commande électronique 92, par exemple un microprocesseur, comprenant l'unité de traitement d'images 15. L'unité de traitement d'images 15 est en outre configurée pour déterminer une intensité lumineuse d'au moins un pixel d'au moins une image numérique parmi les première et deuxième images numériques. L'unité de traitement d'images 15 peut être un microprocesseur spécifique intégré au sein de l'unité de commande électronique 92 et apte à effectuer des calculs sur les première et deuxième images numériques issues respectivement des premier et deuxième capteurs 7, 8, et sur la troisième image numérique élaborée. Par exemple, l'unité de traitement d'images 15 est apte à effectuer les étapes d'algorithmes de traitement d'images. L'unité de commande électronique 92 est couplée à l'atténuateur optique 90 par une connexion 93. L'unité de commande électronique 92 est en outre configurée pour commander une variation de l'opacité de l'atténuateur optique 90. Par exemple, l'atténuateur optique 90 comporte une ou plusieurs cellules à cristaux liquides. L'atténuateur optique 90 reçoit un courant électrique, par la connexion 93, délivré par l'unité de commande électronique 92. L'opacité de l'atténuateur 90 varie en fonction de la valeur du courant électrique reçu. Plus particulièrement, l'unité de commande électronique 92 modifie l'opacité de l'atténuateur 90 à partir de l'intensité lumineuse déterminée par l'unité de traitement d'images 15.

De préférence, le premier capteur 7 est sensible aux rayonnements optiques ayant une longueur d'onde du domaine visible, pour une vision de jour, et le deuxième capteur 8 est sensible aux rayonnements optiques ayant une longueur d'onde du domaine de l'infrarouge, pour une vision de nuit. Dans ce cas, l'unité de commande électronique 92 est configurée pour commander une augmentation de l'opacité de l'atténuateur 90 lorsque l'intensité lumineuse d'au moins un pixel de la première image numérique déterminée est supérieure ou égale à un premier seuil. Ainsi on peut éviter le phénomène d'éblouissement, par exemple créé par le soleil, en vision de jour. En outre, l'unité de commande électronique 92 est configurée pour commander une augmentation de l'opacité de l'atténuateur 90 lorsque l'intensité lumineuse d'au moins un pixel de la deuxième image numérique est supérieure ou égale à un deuxième seuil. Ainsi on peut éviter le phénomène d'éblouissement local, par exemple créé par un luminaire d'une zone urbaine en vision de nuit. Ainsi, on fournit un système d'observation 1 qui améliore l'observation d'une scène. En particulier, on fournit un système automatisé qui tient compte de l'intensité lumineuse du rayonnement optique émis par la scène pour améliorer l'observation.

L'unité de traitement d'images 15 est également configurée pour déterminer les intensités lumineuses de chacun des pixels des première et deuxième images numériques. En outre, l'unité de commande électronique 92 commande une diminution de l'opacité de l'atténuateur lorsque les intensités lumineuses des pixels des première et deuxième images numériques sont inférieures aux premier et deuxième seuils. Lorsque la batterie n'alimente plus le système d'observation 1, l'atténuateur 90 a une valeur d'opacité par défaut correspondant à une transmission ou une réflexion maximale. De préférence, l'opacité de l'atténuateur 90 peut être nulle en l'absence d'alimentation. Ceci permet d'assurer une observation par la quatrième voie optique 10 en l'absence de source d'énergie.

Par ailleurs, l'unité de commande électronique 92 peut être configurée pour commander une variation de l'opacité de l'atténuateur 90 selon une fonction continue suivant une loi de commande analogique, linéaire ou continue par morceaux, par exemple une fonction logarithmique. Selon une variante, l'unité de commande électronique 92 peut être configurée pour commander une variation de l'opacité de l'atténuateur 90 selon une fonction discrète suivant une loi de commande numérique, c'est-à-dire à plusieurs paliers ou niveaux d'opacité, de préférence à au moins trois paliers, par exemple à 128, 256 ou 512 paliers. De manière générale, l'unité de commande électronique 92 transmet une commande, par exemple sous la forme d'une tension en volts, à l'atténuateur 90. La commande en volts ainsi transmise peut suivre une fonction continue ou discrète telle que définie ci-avant.

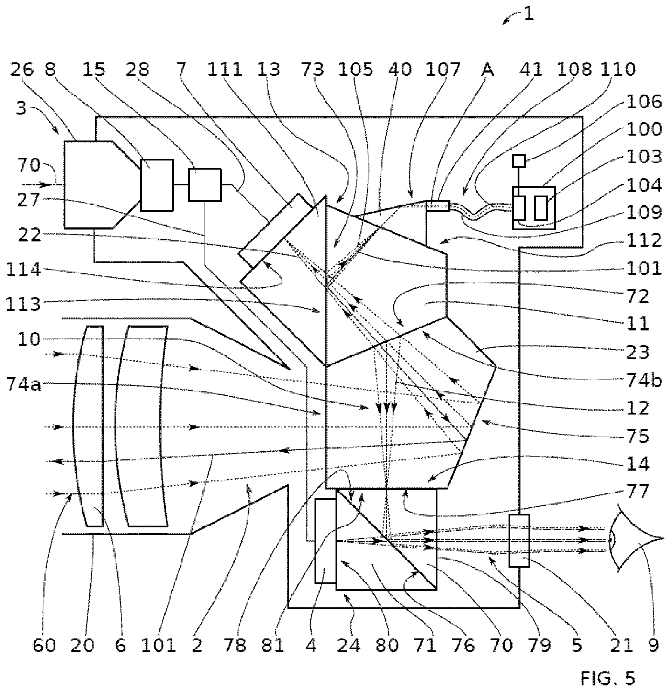

Sur la figure 5, on a représenté un autre mode de réalisation du système d'observation 1. Dans cet autre mode de réalisation, le système d'observation 1 comprend un émetteur 100 configuré pour émettre un quatrième rayonnement optique 101 du domaine de l'infrarouge, c'est-à-dire ayant une longueur d'onde supérieure ou égale à 700 nanomètres. De préférence, le quatrième rayonnement optique 101 a une longueur d'onde dans le domaine du proche infrarouge, c'est-à-dire une longueur d'onde comprise entre 700 et 2000 nanomètres. En outre, dans ce mode de réalisation, l'élément optique 11 est configuré pour transmettre le quatrième rayonnement optique 101 vers la scène à observer. En particulier, l'émission du quatrième rayonnement optique 101 est effectuée à partir de la première voie optique 2, ce qui permet de réduire l'encombrement du système d'observation 1. Par ailleurs, lorsque la première voie optique 2 du système 1 comporte un dispositif optique 6, l'élément optique 11 transmet le quatrième rayonnement optique 101 vers le dispositif optique 6. Ainsi, on peut illuminer la scène à observer, avec une lumière visible à partir d'un appareil équipée d'un capteur du type infrarouge. Plus particulièrement, l'élément optique 11 est transparent aux rayonnements optiques du type infrarouge tout en étant semi-transparent aux rayonnements optiques du domaine du visible, c'est-à-dire aux rayonnements optiques dont la longueur d'onde est comprise entre 380 nanomètres et 750 nanomètres. En d'autres termes, l'élément optique 11 est configuré pour laisser passer la deuxième partie 22 du premier rayonnement optique 60 vers le capteur principal 7, pour réfléchir la première partie 12 du premier rayonnement optique 60 vers la quatrième voie optique 10 et pour transmettre le quatrième rayonnement optique 101 vers le dispositif optique 6.

De manière générale, le dispositif optique 6 est transparent aux rayonnements optiques, du domaine du visible et de l'infrarouge.

L'émetteur 100 peut comporter un amplificateur 103 configuré pour émettre le quatrième rayonnement optique 101 de type laser. Ainsi, on fournit une illumination de la scène avec un point laser

Par ailleurs, l'émetteur 100 est configuré pour émettre un quatrième rayonnement optique 101 de longueur d'onde du domaine de l'infrarouge du type impulsionnel. Le système 1 comporte en outre un récepteur 104 configuré pour recevoir une partie 105 du quatrième rayonnement optique impulsionnel 101 renvoyée par la scène à observer. Le système 1 comprend également une unité de contrôle électronique 106, par exemple un microprocesseur, configurée pour déterminer une distance par rapport à la scène à observer à partir de la partie 105 du rayonnement optique impulsionnel 101 renvoyée. En d'autres termes, la détermination de la distance est réalisée en émettant sur la scène à observer une série d'impulsions laser de courte durée, puis en collectant l'énergie rétrodiffusée par la scène illuminée. La mesure du temps de vol permet ensuite d'en déduire la distance parcourue par le quatrième rayonnement optique 101, et donc la distance entre la scène et le système d'observation 1.

La batterie permet d'alimenter l'émetteur 100, l'amplificateur 103, le récepteur 104 et l'unité de contrôle électronique 106.

Avantageusement, le système d'observation 1 comprend un connecteur optique 107 et une fibre optique 108. La fibre optique 108 comporte une première partie 109 reliant le connecteur optique 107 à l'émetteur 100, et une deuxième partie 110 reliant le connecteur optique 107 au récepteur 104. Préférentiellement, la première partie 109 correspond à une partie centrale de la fibre optique 108, et la deuxième partie 110 correspond à une gaine qui entoure la partie centrale 109. Les première et deuxième parties 109, 110 de la fibre optique 108 sont configurées pour permettre la propagation d'un rayonnement optique, en particulier un rayonnement optique du domaine de l'infrarouge.

Le connecteur optique 107 est configuré pour transmettre le quatrième rayonnement optique 101. Par exemple, le connecteur optique 107 comporte un prisme optique 40, de préférence un prisme droit, et une férule 41 reliant la fibre optique 108 au prisme optique 40. Ainsi, le quatrième rayonnement optique 101 émis par l'émetteur 100 se propage dans la première partie 109 de la fibre optique 108, et la deuxième partie 110 de la fibre optique 108 permet de recevoir la partie 105 du rayonnement optique impulsionnel 101 renvoyée.

Le prisme optique 40 peut être collé sur la férule 41. De préférence, un espace libre de colle, par exemple une couche d'air ou un espace vide, est créé entre la férule 41 et le prisme optique 40 de manière à éviter qu'une émission laser du quatrième rayonnement optique 101 traverse une couche de colle.

Ainsi, on peut utiliser la fibre optique 108 pour déterminer la distance de la scène à observer. En particulier, l'utilisation de la fibre optique 108 permet de juxtaposer la réception et l'émission du quatrième rayonnement optique 101 pour déterminer la distance, ce qui réduit l'encombrement du système d'observation 1.

Par ailleurs, lorsqu'on souhaite illuminer la scène à observer, à partir d'un rayonnement du type laser, l'émetteur 100 amplifie le quatrième rayonnement optique 101, à l'aide de l'amplificateur 103, qui se propage dans la première partie 109 de la fibre optique 108 vers le connecteur optique 107.

Ainsi, le connecteur optique 107 fournit une seule interface optique pour l'émission du quatrième rayonnement optique 101 du type impulsionnel, la réception de la partie 105 du rayonnement optique impulsionnel renvoyée en vue de déterminer une distance, et pour l'émission du quatrième rayonnement optique 101 de type laser pour une illumination de la scène à observer.

L'élément optique 11 est en outre configuré pour transmettre la partie 105 du quatrième rayonnement optique 101 renvoyée par la scène vers le connecteur optique 107. En particulier, son dioptre d'entrée 72 est transparent aux rayonnements optiques du type infrarouge, et semi-réfléchissant, ou semi-transparent, pour les rayonnements optiques du domaine visible. Son dioptre de sortie 73 est un dioptre transparent aux rayonnements optique de longueur d'onde du visible, et réfléchissant aux rayonnements optiques de longueur d'onde de l'infrarouge. Le dioptre de sortie 73 permet de transmettre la deuxième partie 22 du premier rayonnement 60 vers le capteur principal 7, et de réfléchir d'une part le quatrième rayonnement optique 101 vers son dioptre d'entrée 72 et d'autre part la partie 105 du quatrième rayonnement optique 101 renvoyée vers le connecteur optique 107. L'élément optique 11 comporte, en outre, un dioptre de sortie additionnel 112 neutre couplé au prisme optique 40 du connecteur optique 107, pour laisser passer les rayonnements optiques du type infrarouge qui se propagent entre le connecteur optique 107 et le dispositif optique 6. Le système 1 comporte en outre un troisième système optique 111, de préférence un prisme, couplé au premier capteur 7 et à l'élément optique 11. Le troisième système optique 111 permet de transmettre la deuxième partie 22 du premier rayonnement optique 60 vers le premier capteur 7. Le troisième système optique 111 comporte un dioptre d'entrée 113 neutre couplé au dioptre de sortie 73 de l'élément optique 11 et un dioptre de sortie neutre 114 couplé au capteur principal 7.

Dans ce mode de réalisation, le premier système optique 23 est similaire au premier système optique 23 du mode de réalisation de la figure 3. Dans ce mode de réalisation, son premier dioptre d'entrée 74a est neutre pour recevoir le premier rayonnement optique 60 et pour laisser passer les rayonnements optiques de longueur d'onde de l'infrarouge 101, 105. Son deuxième dioptre d'entrée 74b est également neutre aux rayonnements optiques du domaine du visible et de l'infrarouge. Par ailleurs, son dioptre intermédiaire 75 est réfléchissant aux rayonnements optiques 101, 105, 60.

Avantageusement, le troisième système optique 111 et le prisme optique 40 du connecteur optique 107 sont montés fixes sur l'ensemble optique 13 monobloc et font partie de l'ensemble monobloc 50.

Un procédé d'observation peut être mis en œuvre par le système d'observation 1 défini ci-avant. Le procédé comprend les étapes principales suivantes : une réception du premier rayonnement optique émis par la scène à observer à partir de la première voie optique 2 munie du premier capteur 7 élaborant la première image numérique à partir du premier rayonnement optique 60 ; puis, une réception du deuxième rayonnement optique 70 émis par la scène à partir de la deuxième voie optique 3 munie du deuxième capteur 8 élaborant la deuxième image numérique à partir du deuxième rayonnement optique 70. En outre, le procédé comprend une observation d'une troisième image numérique à partir de la troisième voie optique 5 munie de l'afficheur 4 affichant la troisième image numérique à partir des première et deuxième images numériques. En particulier, le procédé comporte une transmission d'une partie 12 du premier rayonnement optique 60 vers la troisième voie optique 5.

Par ailleurs, un procédé de fabrication du système d'observation 1, comprenant un émetteur 100 pour illuminer une scène et calculer une distance entre la scène et le dispositif d'observation 1, est décrit ci-après. Le procédé de fabrication comprend une fourniture des première, deuxième, troisième et quatrième voies optiques 2, 3, 5, 10 et une fourniture de l'émetteur 100. Par ailleurs, le procédé comporte un montage d'un ensemble optique 13 comportant au moins l'élément optique 11.

Avantageusement, le procédé comprend un montage du premier capteur 7 de manière fixe sur l'ensemble optique 13.

Selon un autre avantage, le procédé comprend un montage du réticule de visée 14 sur l'ensemble optique 13. Selon une variante, l'afficheur 4 peut être configuré pour afficher un réticule de visée dans la troisième voie optique 5. Par exemple, le réticule de visée peut être une croix, un cercle ou plus généralement une figure. Le réticule de visée affiché permet, notamment, d'identifier la localisation sur la scène du quatrième rayonnement optique 101. Ainsi, lorsque l'afficheur 4 est monté fixe sur l'ensemble optique 13, par exemple sur le dioptre d'entrée 80 du deuxième système optique 24, on harmonise les première, troisième et quatrième voies optiques 2, 5, 10 avec le réticule de visée affiché.

Le procédé peut en outre comprendre un montage de la fibre optique 108 sur le connecteur optique 107. Puis le procédé comprend un montage du connecteur optique 107 sur l'ensemble optique 13. Un tel procédé permet à la fois d'optimiser un couplage de la partie 105 du quatrième rayonnement optique 101 renvoyée par la scène avec la deuxième partie 110 de la fibre optique 108, c'est-à-dire la fibre de réception de la partie 105 de rayonnement renvoyée par la scène, et de centrer, par rapport au réticule de visée 14, le point de la scène visé par le quatrième rayonnement optique 101.

Avantageusement, après avoir monté la férule 41 sur le prisme optique 40 du connecteur optique 107, l'étape du montage du connecteur optique 107 comporte un réglage d'une position du connecteur optique 107 le long d'un axe parallèle à un axe longitudinal A de la férule 41. Ce réglage permet d'optimiser l'émission et la réception du rayonnement optique impulsionnel pour déterminer la distance de la scène. Lors de ce réglage, la position du centre d'un point formé par le quatrième rayonnement optique 101 sur la scène de change pas mais le diamètre du point est modifié. A la différence des méthodes classiques, on ne cherche pas à placer le connecteur optique 107 dans une position où le diamètre du point est le plus faible possible. En effet, si le connecteur optique 107 est placé dans cette position, la divergence de l'émission du quatrième rayonnement optique 101 est la plus faible et les photons de retour se propagent essentiellement au sein de la première partie 109 de la fibre optique 108. Ces photons sont alors perdus pour la mesure de distance, le couplage entre l'émission et la réception diminue et la mesure est moins précise. On positionne donc le connecteur optique 107 de manière à augmenter la divergence de l'émission du quatrième rayonnement optique 101 pour augmenter le diamètre du point et pour augmenter le nombre de photons de retour au sein de la deuxième partie 110 de la fibre optique 108. Ainsi, on améliore le couplage entre l'émission et la réception pour améliorer la précision de la mesure de distance.

L'étape du montage du connecteur optique 107 peut comporter un réglage d'une position du connecteur optique 107 le long d'un axe perpendiculaire à l'axe longitudinal A de la férule 41. Ce réglage permet d'harmoniser la position du point formé par le quatrième rayonnement optique 101 sur la scène avec le réticule de visée 14, c'est-à-dire de rapprocher le point au plus près de la scène visée par l'utilisateur. Le réglage est effectué de manière à minimiser l'écart relatif entre la position du point et la position du réticule de visée 14. Pour effectuer ce réglage, le réticule de visée 14 est illuminé par la partie inférieure de l'ensemble optique 13. En même temps, le quatrième rayonnement optique 101 est émis. Grâce à une lunette regardant à l'infini les faisceaux sortant du dispositif optique 6 vers la lunette, il est possible de visualiser en même temps le réticule de visée 14 et la position relative du point. La position du connecteur optique 107 est alors choisie de manière à diminuer l'écart, vue par la lunette, entre le point et le réticule de visée 14. Les deux réglages précités peuvent être effectués de manière séquentielle, l'un après l'autre. En effectuant les réglages selon deux axes perpendiculaires entre eux, il y a peu d'influence d'un réglage sur l'autre.

Le procédé peut comprendre, après l'une au moins des étapes de réglage, une fixation du connecteur optique 107 sur l'ensemble optique 13.

Le système et le procédé qui viennent d'être décrits sont particulièrement adaptés pour des systèmes monoculaires, ou du type jumelle, portatifs et pour une vision de jour comme de nuit. Le système d'observation permet de diminuer la taille des batteries, il est particulièrement léger. Il permet, en outre, d'éviter les décalages entre les champs des images, lors de chocs et de vibrations, et facilite l'observation des scènes lorsque l'utilisateur est en mouvement. Le système d'observation permet d'améliorer l'observation d'une scène en vision de jour comme de nuit. Un tel système d'observation permet d'illuminer les scènes à observer et de calculer des distances entre les scènes et le système d'observation, tout en étant compact.

## Revendications

1. Système d'observation, comprenant une première voie optique (2) apte à recevoir un premier rayonnement optique (60) émis par une scène à observer et comportant un premier capteur (7) configuré pour élaborer une première image numérique à partir du premier rayonnement optique (60) ; une deuxième voie optique (3) apte à recevoir un deuxième rayonnement optique (70) émis par la scène et comportant un deuxième capteur (8) configuré pour élaborer une deuxième image numérique à partir du deuxième rayonnement optique (70) ; un afficheur (4) configuré pour afficher une troisième image numérique à partir des première et deuxième images numériques ; et une troisième voie optique (5) couplée à l'afficheur (4) et conformée pour observer la troisième image numérique ; **caractérisé en ce qu'**il comporte une quatrième voie optique (10) reliant les première et troisième voies optiques (2, 5), et **en ce que** la première voie optique (2) comporte un élément optique (11) configuré pour transmettre une partie (12) du premier rayonnement optique (60) vers la quatrième voie optique (10).

2. Système selon la revendication 1, comprenant un ensemble optique (13) comportant l'élément optique (11) et un système optique (23) configuré pour transmettre la partie (12) du premier rayonnement optique (60) de la quatrième voie optique (10) vers la troisième voie optique (5).

3. Système selon la revendication 1, comprenant un ensemble optique (13) comportant l'élément optique (11) et un système optique (23) configuré pour transmettre le premier rayonnement optique (60) vers l'élément optique (11).

4. Système selon la revendication 1 ou 2, dans lequel l'ensemble optique (13) est monobloc.

5. Système selon l'une quelconque des revendications 2 à 4, dans lequel le premier capteur (7) et l'afficheur (4) sont montés fixes sur l'ensemble optique (13).

6. Système selon l'une quelconque des revendications 2 à 5, dans lequel la quatrième voie optique (10) comprend un réticule de visée (14) monté fixe sur l'ensemble optique (13).

7. Système selon l'une quelconque des revendications précédentes, comprenant une unité de traitement d'images (15) configurée pour élaborer la troisième image numérique à partir d'une fusion entre les première et deuxième images numériques.

8. Système selon la revendication 7, dans lequel la quatrième voie optique (10) comporte un atténuateur optique (90) à opacité variable apte à modifier une intensité lumineuse de la partie (12) du premier rayonnement optique (60), l'unité de traitement d'images (15) est en outre configurée pour déterminer une intensité lumineuse d'au moins un pixel d'au moins l'une des première et deuxième images numériques, le système comprenant une unité de commande électronique (92) configurée pour commander une variation de l'opacité de l'atténuateur optique (90) à partir de l'intensité lumineuse déterminée.

9. Système selon la revendication 8, dans lequel l'unité de commande électronique (92) est configurée pour commander une augmentation de l'opacité de l'atténuateur optique (90) lorsque l'intensité lumineuse dudit au moins un pixel est supérieure ou égale à un seuil.

10. Système selon l'une quelconque des revendications précédentes, dans lequel l'élément optique (11) est en outre configuré pour transmettre une autre partie (22) du premier rayonnement optique (60) vers le premier capteur (7).

11. Système selon l'une quelconque des revendications précédentes, comprenant un émetteur (100) configuré pour émettre un troisième rayonnement optique (101) du domaine de l'infrarouge, l'élément optique (11) étant en outre configuré pour transmettre le troisième rayonnement optique (101) vers la scène à observer.

12. Système selon la revendication 11, dans lequel le troisième rayonnement optique (101) est du type impulsionnel, le système comprenant en outre un récepteur (104) configuré pour recevoir une partie (105) du troisième rayonnement optique (101) impulsionnel renvoyée par la scène à observer et une unité de contrôle électronique (106) configurée pour déterminer une distance par rapport à la scène à observer à partir de la partie (105) du troisième rayonnement optique (101) impulsionnel renvoyée.

13. Procédé d'observation, comprenant une réception d'un premier rayonnement optique (60) émis par une scène à observer à partir d'une première voie optique (2) munie d'un premier capteur (7) élaborant une première image numérique à partir du premier rayonnement optique (60) ; une réception d'un deuxième rayonnement optique (70) émis par la scène à partir d'une deuxième voie optique (3) munie d'un deuxième capteur (8) élaborant une deuxième image numérique à partir du deuxième rayonnement optique (70) ; et une observation d'une troisième image numérique à partir d'une troisième voie optique (5) munie d'un afficheur (4) affichant la troisième image numérique à partir des première et deuxième images numériques ; **caractérisé en ce qu'**il comporte une transmission d'une partie (12) du premier rayonnement optique (60) vers la troisième voie optique (5).

14. Procédé selon la revendication 13, comportant un atténuateur optique (90) à opacité variable apte à modifier une intensité lumineuse de la partie (12) du premier rayonnement optique (60), et une détermination d'une intensité lumineuse d'au moins un pixel d'au moins l'une des première et deuxième images numériques et une variation de l'opacité de l'atténuateur optique (90) à partir de l'intensité lumineuse déterminée.

15. Procédé selon la revendication 13 ou 14, comprenant une émission d'un troisième rayonnement optique (101) du domaine de l'infrarouge et une transmission à partir de la première voie optique (2) du troisième rayonnement optique (101) vers la scène à observer.

## Patentansprüche

1. Beobachtungssystem, umfassend einen ersten optischen Weg (2), der geeignet ist, eine erste optische Strahlung (60) zu empfangen, die von einer zu beobachtenden Szene ausgestrahlt wird, und einen ersten Sensor (7) aufweist, der so eingerichtet ist, dass er aus der ersten optischen Strahlung (60) ein erstes digitales Bild erstellt; einen zweiten optischen Weg (3), der geeignet ist, eine zweite optische Strahlung (70) zu empfangen, die von der Szene ausgestrahlt wird, und einen zweiten Sensor (8) aufweist, der so eingerichtet ist, dass er ein zweites digitales Bild aus der zweiten optischen Strahlung (70) erstellt; einen Anzeiger (4), der so eingerichtet ist, dass er ein drittes digitales Bild aus dem ersten und zweiten digitalen Bild anzeigt; und einen dritten optischen Weg (5), der mit dem Anzeiger (4) gekoppelt und so eingerichtet ist, dass er das dritte digitale Bild beobachtet; **dadurch gekennzeichnet, dass** es einen vierten optischen Weg (10) aufweist, der die ersten und dritten optischen Wege (2, 5) verbindet, und dass der erste optische Weg (2) ein optisches Element (11) aufweist, das so eingerichtet ist, dass es einen Teil (12) der ersten optischen Strahlung (60) an den vierten optischen Weg (10) überträgt.

2. System nach Anspruch 1, umfassend eine optische Einheit (13), die das optische Element (11) aufweist, und ein optisches System (23), das so eingerichtet ist, dass es den Teil (12) der ersten optischen Strahlung (60) vom vierten optischen Weg (10) zum dritten optischen Weg (5) überträgt.

3. System nach Anspruch 1, umfassend eine optische Einheit (13), die das optische Element (11) aufweist, und ein optisches System (23), das so eingerichtet ist, dass es die erste optische Strahlung (60) an das optische Element (11) überträgt.

4. System nach Anspruch 1 oder 2, wobei die optische Einheit (13) einteilig ist.

5. System nach einem der Ansprüche 2 bis 4, wobei der erste Sensor (7) und der Anzeiger (4) fest an der optischen Einheit (13) montiert sind.

6. System nach einem der Ansprüche 2 bis 5, wobei der vierte optische Weg (10) ein fest an der optischen Einheit (13) montiertes Fadenkreuz (14) umfasst.

7. System nach einem der vorhergehenden Ansprüche, umfassend eine Bildverarbeitungseinheit (15), die so eingerichtet ist, dass sie das dritte digitale Bild aus einer Fusion zwischen dem ersten und dem zweiten digitalen Bild erstellt.

8. System nach Anspruch 7, wobei der vierte optische Weg (10) einen optischen Dimmer (90) mit variabler Trübung aufweist, der dazu geeignet ist, eine Lichtintensität des Teils (12) der ersten optischen Strahlung (60) zu verändern, wobei die Bildverarbeitungseinheit (15) ferner so eingerichtet ist, dass sie eine Lichtintensität von mindestens einem Pixel von mindestens einem der ersten und zweiten digitalen Bilder bestimmt, wobei das System eine elektronische Steuereinheit (92) umfasst, die eingerichtet ist, um eine Variation der Trübung des optischen Dimmers (90) ausgehend von der bestimmten Lichtintensität zu steuern.

9. System nach Anspruch 8, wobei die elektronische Steuereinheit (92) so eingerichtet ist, dass sie eine Erhöhung der Trübung des optischen Dimmers (90) steuert, wenn die Lichtintensität des mindestens einen Pixels größer oder gleich einem Schwellenwert ist.

10. System nach einem der vorhergehenden Ansprüche, wobei das optische Element (11) ferner so eingerichtet ist, dass es einen anderen Teil (22) der ersten optischen Strahlung (60) zum ersten Sensor (7) überträgt.

11. System nach einem der vorhergehenden Ansprüche, umfassend einen Sender (100), der so eingerichtet ist, dass er eine dritte optische Strahlung (101) des Infrarotbereichs aussendet, wobei das optische Element (11) ferner so eingerichtet ist, dass es die dritte optische Strahlung (101) an die zu beobachtende Szene überträgt.

12. System nach Anspruch 11, wobei die dritte optische Strahlung (101) vom Impulstyp ist, wobei das System ferner einen Empfänger (104) umfasst, der so eingerichtet ist, dass er einen Teil (105) der dritten impulsförmigen optischen Strahlung (101) empfängt, die von der zu beobachtenden Szene zurückgesendet wird, und eine elektronische Steuereinheit (106), die so eingerichtet ist, dass sie einen Abstand zur zu beobachtenden Szene von dem zurückgesendeten Teil (105) der dritten impulsförmigen optischen Strahlung (101) bestimmt.

13. Beobachtungsverfahren, umfassend den Empfang einer ersten optischen Strahlung (60), die von einer zu beobachtenden Szene aus einem ersten optischen Weg (2) mit einem ersten Sensor (7) ausgesendet wird, der ein erstes digitales Bild aus der ersten optischen Strahlung (60) erstellt; den Empfang einer zweiten optischen Strahlung (70), die von der Szene aus einem zweiten optischen Weg (3) ausgesendet wird, mit einem zweiten Sensor (8), der ein zweites digitales Bild aus der zweiten optischen Strahlung (70) erstellt; und eine Beobachtung eines dritten digitalen Bildes aus einem dritten optischen Weg (5) mit einem Anzeiger (4), der das dritte digitale Bild aus dem ersten und zweiten digitalen Bild anzeigt; **dadurch gekennzeichnet, dass** es eine Übertragung eines Teils (12) der ersten optischen Strahlung (60) in den dritten optischen Weg (5) aufweist.

14. Verfahren nach Anspruch 13, das einen optischen Dimmer (90) mit variabler Trübung aufweist, der geeignet ist, eine Lichtintensität des Teils (12) der ersten optischen Strahlung (60) zu verändern, und eine Bestimmung einer Lichtintensität von mindestens einem Pixel von mindestens einem der ersten und zweiten digitalen Bilder und eine Variation der Trübung des optischen Dimmers (90) ausgehend von der bestimmten Lichtintensität.

15. Verfahren nach Anspruch 13 oder 14, umfassend eine Emission einer dritten optischen Strahlung (101) aus dem Infrarotbereich und eine Übertragung von dem ersten optischen Weg (2) der dritten optischen Strahlung (101) zur zu beobachtenden Szene.

## Claims

1. Observation system comprising a first optical path (2) capable of receiving first optical radiation (60) emitted by a scene to be observed and including a first sensor (7) configured to generate a first digital image from the first optical radiation (60); a second optical path (3) capable of receiving second optical radiation (70) emitted by the scene and including a second sensor (8) configured to generate a second digital image from the second optical radiation (70); a display (4) configured to display a third digital image from the first and second digital images; and a third optical path (5) coupled to the display (4) and designed to observe the third digital image; **characterised in that** it includes a fourth optical path (10) connecting the first and third optical paths (2, 5), and **in that** the first optical path (2) includes an optical element (11) configured to transmit a part (12) of the first optical radiation (60) to the fourth optical path (10).

2. System according to claim 1, comprising an optical assembly (13) including the optical element (11) and an optical system (23) configured to transmit the part (12) of the first optical radiation (60) from the fourth optical path (10) to the third optical path (5).

3. System according to claim 1, comprising an optical assembly (13) including the optical element (11) and an optical system (23) configured to transmit the first optical radiation (60) to the optical element (11).

4. System according to claim 1 or 2, wherein the optical assembly (13) is a one-piece assembly.

5. System according to any one of claims 2 to 4, wherein the first sensor (7) and the display (4) are fixedly mounted on the optical assembly (13).

6. System according to any one of claims 2 to 5, wherein the fourth optical path (10) comprises a crosshair (14) fixedly mounted on the optical assembly (13).

7. System according to any one of the preceding claims, comprising an image processing unit (15) configured to produce the third digital image from a merging between the first and second digital images.

8. System according to claim 7, wherein the fourth optical path (10) includes an optical attenuator (90) having a variable opacity and capable of modifying a light intensity of the part (12) of the first optical radiation (60), the image processing unit (15) is further configured to determine a light intensity of at least one pixel of at least one of the first and second digital images, the system comprising an electronic control unit (92) configured to command a variation in the opacity of the optical attenuator (90) based on the determined light intensity.

9. System according to claim 8, wherein the electronic control unit (92) is configured to command an increase in the opacity of the optical attenuator (90) when the light intensity of said at least one pixel is greater than or equal to a threshold.

10. System according to any one of the preceding claims, wherein the optical element (11) is furthermore configured to transmit a further part (22) of the first optical radiation (60) to the first sensor (7).

11. System according to any one of the preceding claims, comprising an emitter (100) configured to emit third optical radiation (101) in the infrared range, the optical element (11) being furthermore configured to transmit the third optical radiation (101) to the scene to be observed.

12. System according to claim 11, wherein the third optical radiation (101) is of the pulsed type, the system furthermore comprising a receiver (104) configured to receive a part (105) of the third pulsed optical radiation (101) returned by the scene to be observed and an electronic control unit (106) configured to determine a distance to the scene to be observed based on the returned part (105) of the third pulsed optical radiation (101).

13. Observation method, comprising receiving first optical radiation (60) emitted by a scene to be observed from a first optical path (2) provided with a first sensor (7) generating a first digital image from the first optical radiation (60); receiving second optical radiation (70) emitted by the scene from a second optical path (3) provided with a second sensor (8) generating a second digital image from the second optical radiation (70); and observing a third digital image from a third optical path (5) provided with a display (4) displaying the third digital image from the first and second digital images; **characterised in that** it includes transmitting a part (12) of the first optical radiation (60) to the third optical path (5).

14. Method according to claim 13, including an optical attenuator (90) having a variable opacity and capable of modifying a light intensity of the part (12) of the first optical radiation (60), and determining a light intensity of at least one pixel of at least one of the first and second digital images, and varying the opacity of the optical attenuator (90) based on the determined light intensity.

15. Method according to claim 13 or 14, comprising emitting third optical radiation (101) in the infrared range and transmitting, from the first optical path (2), the third optical radiation (101) to the scene to be observed.
